# EUROPEAN PATENT APPLICATION

(11) **EP 1 304 677 A1**
(43) Date of publication of application: **23.04.2003**
(21) Application number: 01936883.6
(22) Date of filing: 06.06.2001
(51) Int. Cl.: G09G 5/14, G09G 5/36, G06F 3/00, G06T 11/80, H04N 5/262

(54) **PREVIEW IMAGE DISPLAY METHOD, AND PREVIEW IMAGE DISPLAY DEVICE**

(30) Priority: 19.06.2000 JP 2000183606
(71) Applicant: Shima Seiki Mfg., Ltd, Wakayama-shi, Wakayama 641-8511 (JP)
(72) Inventor: MORIMOTO, Shinji, Wakayama-shi, Wakayama 640-8443 (JP); MATSUMOTO, Norihisa, Wakayama-shi, Wakayama 641-0003 (JP)
(74) Representative: Hillier, Peter
(86) International application number: JP0104791
(87) International publication number: WO01099094

(57) **Abstract**

A preview image display method for displaying an original image (G1) on an original image display window (W1) to subject the original image to a special effect treatment. A preview display window (W2) is set in the original image display window (W1), and a preview image (G2), obtained by subjecting the original image in the preview display window to special effect treatment, is displayed in the preview display window (W2) at the same display magnification as that of the original image.

## Description

### Technical Field

The present invention relates to a display technology that an original image stored in storage means such as a memory is displayed in an original image display region set on a screen of display means such as a display device and also the original image is given special effect processing, such as "Blur processing" and "Extract processing".

### Background Art

In general, image processing software, such as photo-retouching software, has various functions of special effect processing, including "Extract processing" for extracting a profile line of an image, "Sharpness processing" for sharpening the image, and "Blur processing" for blurring the image. These special effect processing are called "Filtering processing".

The special effect processing requires various arithmetic operations, such as differential calculation and mean-value calculation, for the image data of the original image stored in the storage means. Accordingly, it is not easy to process the image data and display it in real time, thus requiring a lot of time for the operations.

For affording effective trials of various special effects, only a part of the original image usually undergoes the special effect processing and is displayed on the screen in the form of the preview image for the confirmation of the effect produced by the special effect processing. If the user considers the effect processed to be satisfactory from the preview image on the screen, then the special effect processing will be given to the entire original image. On the other hand, if the user considers the effect processed to be unsatisfactory, then the conditions for the processing will be changed or alternate special effect processing will be given to that part in the same manner, to trial various special effect processing.

The check of the effect by using this preview image is advantageous in that since only a part of the original image is processed, the preview image can be displayed in a relatively short time, such that the effects produced by various special effect processing can be checked sequentially.

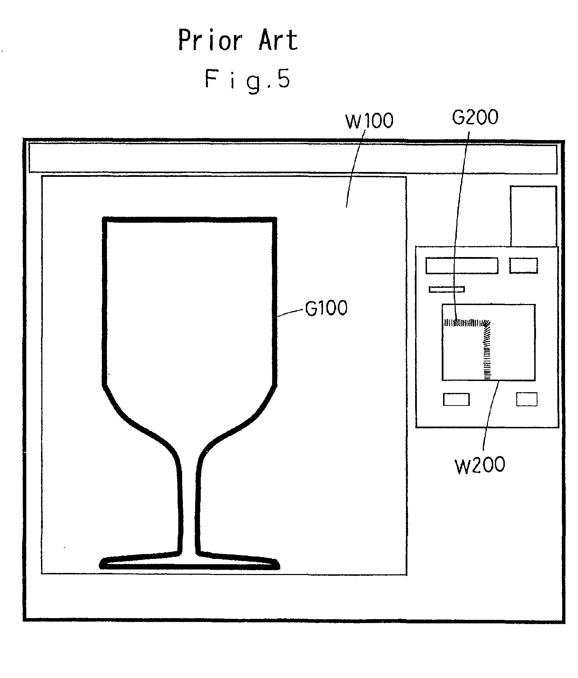

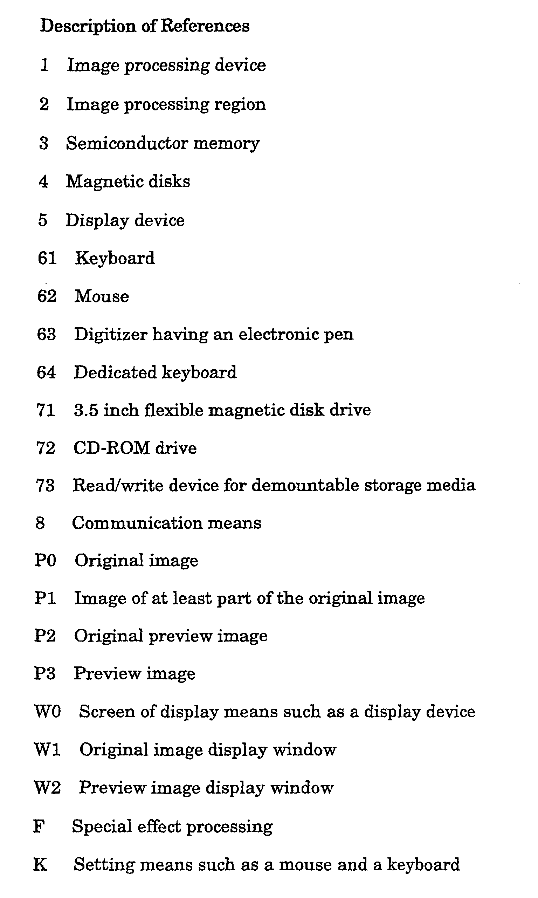

This conventional method for displaying the preview image will be described with reference to FIG. 5.

In FIG. 5, a glass G100 of an original image is displayed on an original image display window W100 set in a display device. Although the image data of the whole glass G100 is stored in the storage means, such as a memory and a magnetic disk, the original image is sometimes partially displayed depending on a preset zoom.

For example, when the user wants to check what the image of the glass produced by the blur processing of the special effect processing will be, he/she selects a "blur" command from the special effect processing menu. Then, a preview image display window W200 is set in a part of the screen of the display and a preview image G200 produced by the specified "blur processing" is displayed on the preview image display window W200.

In general, the preview image display window W200 opened is smaller than the original image display window W100 and is set at a different location than the original image display window W100, and the preview image is displayed at a different zoom than the original image. The conventional display devices have the capabilities of changing the zoom of the preview image and the location of the same. However, none of them have the capabilities of specifying a specific part of the original image and enabling a corresponding part of the preview image to be superimposed on the specified part of the original image and displayed at the same zoom as the original image.

The conventional method for displaying the preview image mentioned above has the disadvantage that since the preview image display window for the preview image to be displayed is set at a different location than the original image display window, it is hard to check the effect for the specific part of the original image produced by the special effect processing.

One of the reasons therefor is that the zoom at which the original image is displayed and the zoom at which the preview image is displayed is different from each other. The different zoom may cause the visual difference between the effect for part of the image produced by the special effect processing and the effect for the entire image produced by the special effect processing.

Another reason therefor is that the location at which the original image is displayed and the location at which the preview image is displayed are different from each other. The difference in location between the preview image display window and the original image display window compels the viewer's attention to drift between one image and the other for comparison and makes it hard to check the effect produced by the special effect processing.

Accordingly, the present invention has been made, with the aim to make it easier to check the effect produced by the special effect processing by displaying the preview image at the same zoom and at the same location as the original image.

### Disclosure of the Invention

The present invention provides a method for displaying a preview image, which is taken when at least a part of an original image stored in storage means is displayed in an original image display region set in display means and special effect processing is performed for the at least part of the original image, wherein there are provided means for setting a preview image display region in the original image display region; and means for allowing the preview image, as was produced by the special effect processing for the original image in the preview image display region, to be displayed in the preview image display region at the same zoom as the original image.

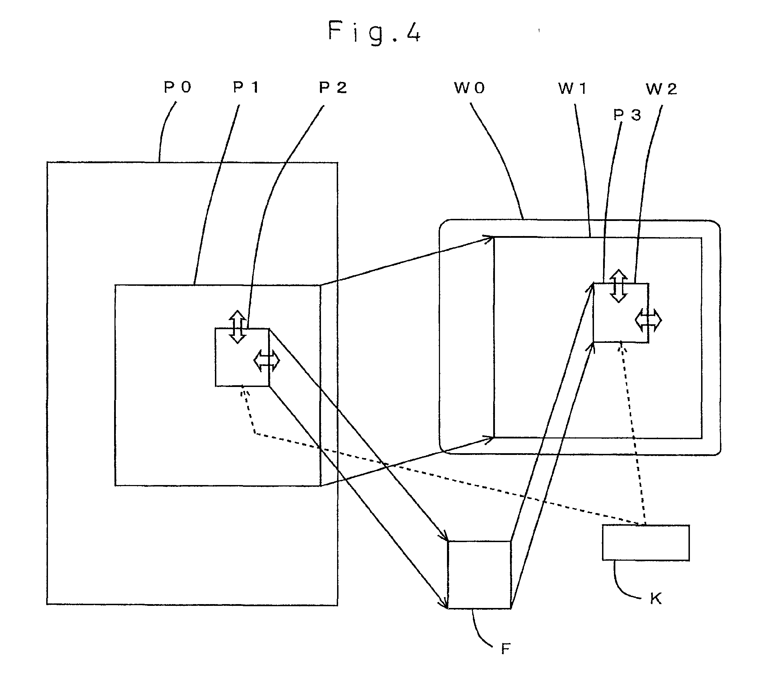

Referring to FIG. 4, an image P1 of the at least part of the original image P0 is displayed in the original image display region W1 set in the screen W0 of the display means such as a display device. After the preview image display region W2 is set in the original image display region W1, the original preview image P2 corresponding to the image data in the preview image display region W2 is specified and then the preview image P3 produced by performing the special effect processing F for the original preview image P2 by using an image processing device and the like is displayed in the preview image display region W2 at the same zoom as the original image.

Also, when a location in the original image display region at which the original image is displayed is changed, a location in the preview image display region at which the preview image is displayed is allowed to vary in accordance with the change of location of the original image.

Further, when the location in the original image display region and a zoom at which the original image is displayed are changed, the location in the preview image display region and a zoom at which the preview image is displayed are allowed to vary in accordance with the changes of location and zoom of the original image.

In addition, in the method, the preview image display region is made to be movable relative to the original image. As a result of this, for example when the original image is moved, the preview image display region can be stayed at the initial location, while on the other hand, only the preview image display region can be moved, without moving the original image.

Also, the present invention provides a preview image display device, which is structured so that at least a part of an original image stored in storage means is displayed in an original image display region set in display means and a preview image produced by special effect processing for the at least part of the original image is displayed in the display means, together with the original image, the preview image display device comprising setting means for setting a preview image display region in the original image display region; image generating means for generating the preview image by the special effect processing for the original image corresponding to the preview image display region; and display control means for displaying the preview image in the preview image display region at the same zoom as the original image.

Referring again to FIG. 4, the location of the preview image display region W2 in the original image display region W1 can be set at a desired location and size via the setting means K such as a mouse and a keyboard. After having been given the special effect processing F by the image generating means, the original preview image P2 corresponding to the preview image display region W2 set by the setting means K is displayed as the preview image P3 on the screen of the display means via the display control means.

It is to be noted that the preview image display region W2 is set at a predetermined location and size in the original image display region W1, even when the setting means K is not used.

In the present invention, the location at which the preview image is displayed corresponds to the location at which the region of the original image corresponding to the set preview image display region is displayed and also the preview image is displayed at the same zoom as the original image. In other words, the region of the original image corresponding to the set preview image display region is replaced with the preview image and displayed in that region of the original image.

### Brief Description of the Drawings

FIG. 1 schematically illustrates construction of an embodiment of an image processing device according to the present invention;
FIG. 2 is a flow chart for outlining processing procedures of a preview image display method of the present invention;
FIG. 3 is a diagram for illustrating the relation between the preview image and the original image established by the present invention;
FIG. 4 is an explanatory diagram for illustrating the construction of the claims; and
FIG. 5 is a diagram for illustrating the relation between a preview image and an original image established by prior art.

### Best Mode for Carrying out the Invention

A method for displaying a preview image and a preview image display device according to the present invention will be described below with reference to the accompanying drawings showing an image processing device of an embodiment used for the method.

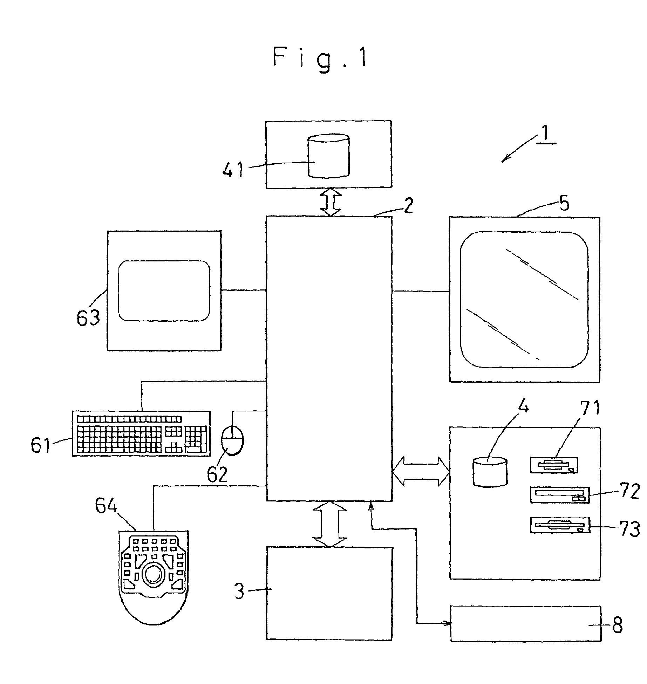

In FIG. 1, 1 denotes an image processing device used for a method for displaying a preview image of the present invention. The image processing device is constructed so that a plurality of CPUs can be operated in parallel to produce high throughput capacities.

2 denotes an image processing region having a plurality of CPUs. 3 denotes a semiconductor memory for storing image data of a processing object. 4 denotes a plurality of magnetic disks for storing the image data. 41 denotes the magnetic disks on which programs are written. 5 is a CRT display device for displaying the image data processed in the image processing region 2.

61 denotes a keyboard; 62 denotes a mouse; 63 denotes a digitizer having an electronic pen; and 64 denotes a dedicated keyboard having a track ball and a number of keys.

71 denotes a 3.5 inch flexible magnetic disk drive; 72 denotes a CD-ROM drive; and 73 denotes a read/write device for demountable storage media such as MO and CD-R. 8 denotes two-way communication means for communicating between the device and the outside.

The semiconductor memory 3 is expandable to the storage of 2.7GB so that the color image data of 10,240×12,288 pixels can be processed (the color image of 10 inch ×12 inch can be output at 1,000 dpi) in real time.

When the programs written on the magnetic disks 41 are activated, the image processing region 2 comes to have special effect functions, such as various edit functions and special effect processing, for the image data on the semiconductor memory 3. The special effect processing include, for example, "Blur processing", "Sharpness processing", "Unsharpness processing", and "Emboss processing".

These functions are operated via input means, such as the keyboard 61, the mouse 62, the digitizer 63, and the dedicated keyboard 64, and the result is displayed on the screen of the CRT display 5.

The image data to be processed are captured through the demountable storage media such as MO and CD-R or captured from outside via communication means 8.

The image data after processed are written onto the dismountable storage media such as MO and CD-R or output to the outside via the communication means 8.

Storage means recited in Claims corresponds in construction to the semiconductor memory 3. An original image display region recited in Claims corresponds in construction to an original image display window W1. A preview image display device recited in Claims corresponds in construction to the image processing device 1. A preview image display region recited in Claims corresponds in construction to a preview image display window W2. Setting means recited in Claims corresponds in construction to the input means such as the keyboard 61, the mouse 62, the digitizer 63, and the dedicated keyboard 64. Image generating means and display control means recited in Claims correspond in construction to the image processing region 2. Display means recited in Claims corresponds in construction to the display device 5.

At least part of the original image stored in the semiconductor memory 3 (the setting means) is set by using the keyboard 61 or equivalent (the setting means) and then is processed by the image processing device 1 (the preview image display means). Then, the at least part of the original image processed is displayed on the original image display window W1 (the original image display region) set in the screen of the display device 5 (the display means).

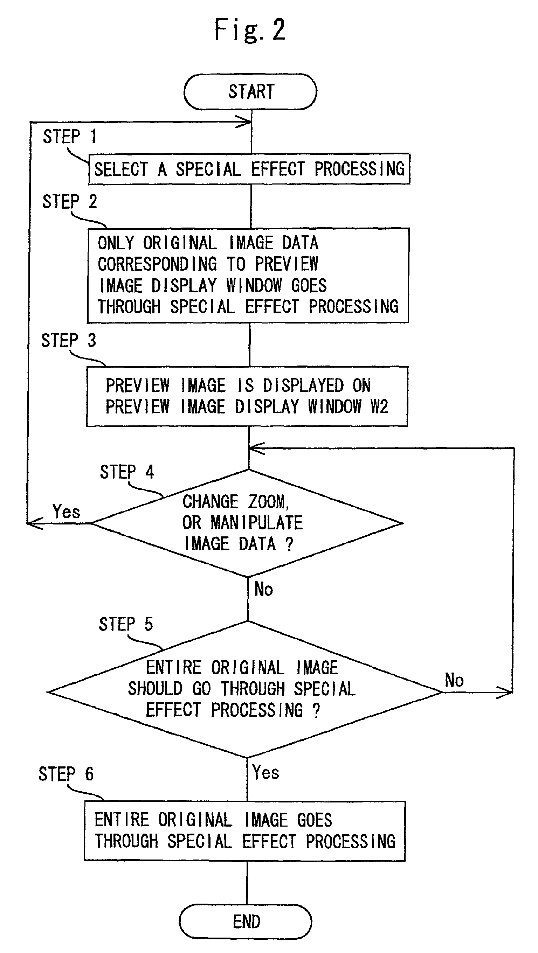

Referring now to FIG. 2, the characteristics of the present invention, that is, the processing procedures of the preview image display process of the functions of the image processing device will be described.

The preview image display processing procedure of FIG. 2 starts when the at least part of the original image is displayed on the original image display window W1 in the main processing procedure, not shown, and the special effect processing, such as Filtering, is selected.

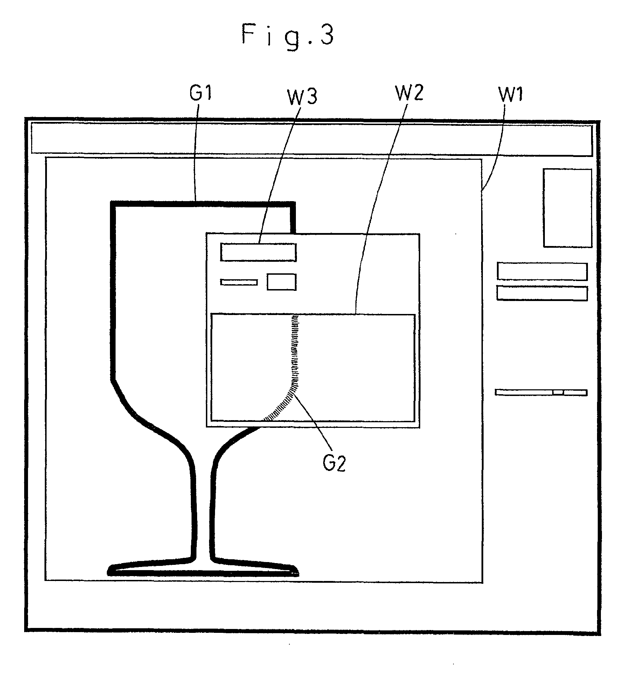

In the step 1, when a certain processing, e.g. "Blur processing", is selected by operating a menu selecting window W3 to select the special effect processing of FIG. 3, only the original image data corresponding to the preview image display window W2 is blurred in the step 2. In the step 1, the last selected special effect processing is kept intact, so that the operation to select the processing in the step 1 can be eliminated if there is no need to change it.

In the step 3, the "blurred" image is transferred to the preview image display window W2 and is displayed thereon as the preview image. The state produced in this step is illustrated in FIG. 3. As seen from FIG. 3, the original image G1 is displayed on the original image display window W1, except its corresponding part to the preview image display window W2, and the "blurred" preview image G2 is displayed on the preview image display window W2 only. Besides, the preview image is displayed at the substantially same zoom and location as the original image. Hence, it is easy for the operator to intuitively recognize what the image at the part of the original image produced by the blur processing will be.

In the step 4, when the user wants to zoom in or out the image to confirm the condition of the image, he/she changes the zoom. When he/she wants to look at the other part of the preview image, he/she manipulates the image data to move the image data relative to the display window. When such a manipulation is performed, the processing procedure is returned to the step 1 and an image processed under the changed conditions is displayed on the preview image display window W2 as the preview image.

When the user checks the effect produced by the special effect processing and finds it satisfactory, he/she selects "YES". Then, the processing procedure goes on to the next step 5, with no change.

In the step 5, the user confirms on whether or not the entire original image should go through the selected special effect processing. When "YES" is selected, the processing procedure goes on to the next step 6, wherein the entire image data of the original image is "blurred" and then displayed on the original image display window W1. At this time, the preview image display window W2 should be closed.

In the step 5, when the entire image data of the original image should not go through the selected special effect processing, the processing procedure is returned to the step 4, followed by the subsequent processing procedures.

After this manner, the processing procedure is returned to the main processing, followed by the subsequent main processing procedures.

The original image to be displayed on the original image display window W1 may be displayed partially or entirely. The region of the original image to be displayed can be specified by operating the input means including the keyboard 61, the mouse 62, the digitizer 63, and the dedicated keyboard 64. In other words, not only the zoom at which the original image is displayed but also the region of the original image to be displayed on the original image display window W1 can be freely specified. Accordingly, in this condition, the original image display window W1 as well as the preview image display window W2 can be put into their active states simultaneously so that they can both be scrolled to the next page.

In addition, the preview image is displayed on the preview image display window W2 at the same zoom and location as the original view as was last displayed on the original image display window W1 before the preview image is displayed thereon. The zoom and location at which the preview image is displayed is allowed to vary in accordance with changes of the original image displayed on the original image display window W1. This means that the zoom of the preview image varies in accordance with changes of the original image, while also, the location of the preview image varies in accordance with the changes of the original image.

Thus, since the preview image is displayed at the same location and zoom as the original image, the user can check the preview image with high efficiency with little movement of the eyes.

In addition, the user can effectively check the preview image corresponding to the specified part of the original image by moving the preview image display window relative to the original image. For example, when the original image is moved, the preview image can be stayed at the initial location to produce the relative movement therebetween. On the other hand, when the preview image is moved, the original image can be stayed at the initial location to produce the relative movement therebetween. This enables the user to check the preview image at a desired location by simply moving one of the original image and the preview image display window relative to the other.

A plurality of preview image display windows may be used and opened sequentially. Also, the border between the preview image display window and the original image display window should preferably have a narrowest possible width.

### Capabilities of Exploitation in Industry

According to the preview image displaying method of the present invention, since the preview image is displayed at the same zoom as the original image at the location corresponding to the original image, the user can make an image editing work with efficiency with little movement of the eyes.

In addition, when the location on the original image display region at which the original image is displayed is changed, the location on the preview image display region at which the preview image is displayed can also vary in accordance with the change of location of the original image. As a result of this, the user can check the preview image at a desired location.

Further, when the location on the original image display region and the zoom at which the original image is displayed are changed, the location on the preview image display region and the zoom at which the preview image is displayed can also vary in accordance with the change of location and zoom of the original image. As a result of this, the user can check the preview image at desired location and zoom.

Furthermore, the preview image display region can be moved relative to the original image. For example, when the original image is moved, the preview image can be stayed at the initial location to produce the relative movement therebetween. On the other hand, when the preview image is moved, the original image can be stayed at the initial location to produce the relative movement therebetween. This enables the user to check the preview image at a desired location by simply moving one of the original image and the preview image display region relative to the other.

Also, the present invention can provide an image processing device that can produce the effects mentioned above.

## Claims

1. A method for displaying a preview image, which is taken when at least a part of an original image stored in storage means is displayed in an original image display region set in display means and special effect processing is performed for the at least part of the original image,
wherein a preview image display region is set in the original image display region; and
wherein the preview image produced by the special effect processing for the original image corresponding to the preview image display region is displayed at the same zoom as the original image.

2. The method for displaying the preview image according to Claim 1, wherein when a location in the original image display region at which the original image is displayed is changed, a location in the preview image display region at which the preview image is displayed is allowed to vary in accordance with the change of location of the original image.

3. The method for displaying the preview image according to Claim 1, wherein when the location in the original image display region and a zoom at which the original image is displayed are changed, the location in the preview image display region and a zoom at which the preview image is displayed are also allowed to vary in accordance with the changes of location and zoom of the original image.

4. The method for displaying the preview image according to any one of Claims 1, 2 and 3, wherein the preview image display region is moved relative to the original image.

5. A preview image display device, which is structured so that at least a part of an original image stored in storage means is displayed in an original image display region set in display means and a preview image produced by special effect processing for the at least part of the original image is displayed in the display means, together with the original image, the preview image display device comprising:
setting means for setting a preview image display region in the original image display region;
image generating means for generating the preview image by the special effect processing for the original image corresponding to the preview image display region; and
display control means for displaying the preview image in the preview image display region at the same zoom as the original image.
